# FASCICULE DE BREVET EUROPEEN

(11) **EP 1 289 890 B1**
(45) Date de publication et mention de la délivrance du brevet: **26.04.2006**
(21) Numéro de dépôt: 01931782.5
(22) Date de dépôt: 03.05.2001
(51) Int. Cl.: C02F 1/68

(54) **DISPOSITIF DE DOSAGE D'UN REACTIF PAR DISSOLUTION DANS UN ECOULEMENT DE LIQUIDE**
DOSIERVORRICHTUNG FÜR EINEN FLÜSSIGEN REAGENTEN DURCH AUFLÖSUNG IN EINEM FLÜSSIGEN STROM
DEVICE FOR MEASURING DOSES OF A REAGENT BY DISSOLUTION IN A LIQUID FLOW

(30) Priorité: 26.05.2000 FR 0006747
(43) Date de publication de la demande: 12.03.2003
(73) Titulaire: Institut Français du Pétrole, 92852 Rueil-Malmaison Cedex (FR); La Société Prodose, 31660 Bessières (FR)
(72) Inventeur: ESTEVE, Guy, Emmanuel, 31450 Montgiscaro (FR); BOUKARI, Morou, 31100 Toulouse (FR); AURIOL, Marc, F-31130 Flourens (FR); NEGRO, Manuel, F-31380 Gragnague (FR)
(86) Numéro de dépôt international: PCT/FR2001/001350
(87) Numéro de publication internationale: WO 2001/092164

(56) Documents cités:
- EP-A- 0 751 097
- FR-A- 2 722 577
- US-A- 3 727 760

## Description

L'invention concerne un dispositif de dosage d'un réactif dans un liquide, du type dans lequel un réactif sous forme de galets est dissous par érosion dans un écoulement de liquide.

Les techniques de dosage consistant à dissoudre un réactif solide par écoulement d'un liquide au contact du réactif sont actuellement utilisées de façon courante, notamment pour la désinfection de l'eau, le réactif consistant alors en un produit chloré.

Des dispositifs de dosage conçus pour la mise en oeuvre de ces techniques sont décrits par exemple dans les documents US 3 595 786, ZA 873 346, US 4 584 106, US 4 759 907 et US 5 089 127 et comprennent essentiellement un magasin à galets de réactif et une enceinte communiquant avec ce magasin et comportant une entrée de liquide, des moyens d'écoulement du liquide au contact d'au moins un galet et une sortie de liquide.

L'inconvénient principal de ces dispositifs connus réside dans le fait qu'ils ne permettent pas de maîtriser de façon efficace l'uniformité de la concentration de réactif dissous, en particulier lorsque ces dispositifs sont utilisés de façon discontinue, par exemple pour rendre potable l'eau d'un puits, notamment dans les pays en voie de développement.

En ce qui concerne les dispositifs décrits dans les documents ZA 873 346 et US 5 089 127, le galet de réactif est creusé ponctuellement par l'écoulement de liquide, ce qui provoque, lorsque l'épaisseur du galet devient relativement faible, une fragmentation de ce dernier en morceaux plus ou moins gros qui tombent dans des canaux d'écoulement du liquide, en provoquant une augmentation momentanée inacceptable de la concentration en réactif dans le liquide.

En ce qui concerne les dispositifs décrits dans les documents US 4 584 106 et US 3 595 786, une augmentation de la concentration en réactif se produit à chaque démarrage de l'installation de pompage, du fait que, durant des périodes de non utilisation, une quantité de liquide reste au contact des galets de réactif et provoque un ramollissement de ces derniers et leur dissolution. Ce liquide se trouve donc saturé en réactif dissous, ce qui entraîne une surconcentration en réactif des premières quantités de liquide délivrées au redémarrage de l'installation et a pour conséquence un gaspillage de réactif et une diminution de l'autonomie de fonctionnement du dispositif de dosage. En outre, dans la pratique, ces variations de concentration posent un problème majeur dans le cas du traitement de l'eau potable, car une surconcentration en réactif entraîne une dénaturation du goût de l'eau, qui peut provoquer un sentiment de méfiance des utilisateurs des dispositifs de dosage et conduire à un refus d'utiliser ces dispositifs.

I1 n'est par ailleurs pas acceptable, lorsque l'eau est un produit rare, de jeter les premières quantités d'eau délivrées par ces dispositifs.

Une autre technique décrite dans le document FR 2 722 577 consiste à utiliser un galet de réactif ayant une section droite, plane et constante, à faire s'écouler le liquide sous forme d'un film d'épaisseur prédéterminée au contact de la face inférieure plane de ce galet de façon à ce que la surface du film de liquide affleure la face inférieure du galet, et à maintenir le galet de façon à ce que, sous l'effet de son poids, sa face inférieure reste en contact permanent avec la surface du film de liquide au fur et à mesure de la dissolution du réactif.

Cette technique a pour inconvénient que le dispositif ne peut être utilisé que s'il est dans une position parfaitement horizontale. En effet, le film d'eau ne peut se former et avoir une épaisseur constante qu'en position parfaitement horizontale, une très faible inclinaison du dispositif provoquant la création d'un circuit préférentiel de circulation de l'eau, avec une répartition non uniforme de l'eau sous le galet et la formation d'un film à épaisseur non constante. Une partie de la base du galet à dissoudre peut donc ne pas être en contact avec l'eau à traiter, ce qui conduit à une dissolution irrégulière du galet et à une irrégularité du dosage.

Un autre inconvénient de ce dispositif connu est qu'il ne peut fonctionner avec un débit important de liquide. En effet, dans ce cas, le liquide forme des jets qui creusent le galet en plusieurs endroits et le fragmentent en morceaux qui tombent dans le liquide à traiter et augmentent de façon momentanée et inacceptable sa concentration en réactif.

Une troisième technique de dosage est décrite dans le document FR 2 764 821 et consiste à empiler les galets de réactif dans un magasin tubulaire dont le fond est perforé. Ce magasin est disposé dans une enceinte tubulaire comportant une entrée de liquide en partie supérieure et une sortie de liquide en partie inférieure. Le liquide introduit dans l'enceinte remplit progressivement l'espace entre l'enceinte et le magasin tubulaire, passe à l'intérieur du magasin par les perforations de la paroi de fond de celui-ci, vient lécher la face inférieure du galet inférieur, se charge en réactif et ressort par les perforations de la paroi de fond du magasin et par le ou les orifices de sortie de l'enceinte.

Dans cette technique connue, le réactif a tendance à obturer les perforations de la paroi de fond du magasin, ce qui provoque l'arrêt de sa dissolution dans le liquide, d'où des risques sanitaires graves pour les utilisateurs lorsque le dispositif est utilisé pour rendre de l'eau potable.

Un autre inconvénient de cette technique connue est qu'elle ne peut être utilisée dans un château d'eau ou dans un réservoir de stockage d'eau, dans lequel la différence de niveau entre la conduite d'alimentation en eau et la surface libre de l'eau stockée, lorsque le château d'eau ou le réservoir est plein, est très faible (de l'ordre de 5 à 10 centimètres), alors que la différence de niveau entre l'arrivée d'eau à traiter et la sortie de l'eau traitée dans le dispositif correspond sensiblement à la hauteur du magasin à galet et est nettement supérieure, de l'ordre de 50 à 100 centimètres par exemple.

Un autre inconvénient présenté par tous les dispositifs connus de la technique antérieure est qu'ils ne peuvent pas fonctionner correctement lorsqu'ils sont utilisés dans des réseaux de liquide sous pression où dans des canalisations en charge, car le liquide remplit alors tout le magasin à galets et provoque leur ramollissement et leur dissolution, le liquide se trouvant alors saturé en réactif dissous, avec les conséquences déjà évoquées : gaspillage des réactifs, diminution importante de l'autonomie de fonctionnement des dispositifs, inconsommabilité lorsque le liquide est de l'eau, etc.

La présente invention a notamment pour but d'éviter ces inconvénients de la technique antérieure grâce à un dispositif de dosage qui permet d'obtenir une concentration en réactif dissous régulière et uniforme dans le temps et qui est capable de fonctionner aussi bien avec de très faibles charges de liquide en entrée qu'avec un écoulement de liquide sous pression ou en raccordement à une canalisation en charge.

L'invention a également pour but de fournir un dispositif de dosage de structure simple, d'utilisation aisée et de conception économique.

Elle propose à cet effet un dispositif de dosage par dissolution d'un réactif dans un écoulement de liquide, comprenant :
- un magasin à réactif, contenant au moins un galet de réactif à dissoudre, et
- une enceinte entourant au moins la partie inférieure du magasin à réactif et comportant une entrée de liquide, des moyens d'amenée du liquide au contact du galet de réactif et des moyens de sortie du liquide,
caractérisé en ce qu'il comprend également des moyens de formation d'au moins un et de préférence plusieurs jets de liquide dirigés sensiblement radialement vers le galet à dissoudre, et des moyens de support du galet dans une position exposant au moins la base de ce galet aux jets de liquide.

L'effet du ou des jets de liquide sur la base du galet de réactif est fonction de l'énergie cinétique du ou des jets de liquide qui est elle-même fonction de la pression d'alimentation de liquide dans le dispositif de dosage. La dissolution du réactif dans le liquide est donc fonction de cette pression d'alimentation et s'adapte automatiquement aux variations de celle-ci, de sorte que la concentration en réactif dans le liquide peut rester uniforme au cours du temps, même si la pression de liquide varie.

Selon une autre caractéristique de l'invention, les moyens de formation de jets de liquide sont présentés par une paroi tubulaire interne de l'enceinte et sont à distance d'une paroi inférieure de cette enceinte, en définissant dans celle-ci une chambre annulaire d'accumulation de liquide.

Cette chambre annulaire a un effet de régulation dans le temps sur la pression des jets de liquide et sur leur énergie cinétique, et contribue donc à régulariser dans le temps la concentration en réactif dans le liquide traité.

Avantageusement, les moyens de formation des jets sont des orifices sensiblement radiaux de la paroi tubulaire interne précitée de l'enceinte.

Cette réalisation est particulièrement simple et économique.

Dans une forme de réalisation de l'invention, les moyens de support de galet sont portés par une paroi inférieure de l'enceinte et s'étendent sensiblement dans l'axe du magasin à réactif, sous l'extrémité inférieure de celui-ci, qui est ouverte et laisse exposée la base du galet de réactif à dissoudre.

Dans ce cas-là, le magasin à réactif et le support de galet peuvent être formés de deux tubes, portés respectivement par la paroi supérieure et par la paroi inférieure de l'enceinte, de préférence de façon amovible ou démontable.

Dans le dispositif selon l'invention, la distance axiale entre les moyens d'entrée et de sortie de liquide de l'enceinte peut être relativement faible, par exemple de l'ordre de 5 centimètres ou moins, ce qui permet d'utiliser le dispositif dans un château d'eau ou dans un réservoir de stockage d'eau.

Selon un autre mode de réalisation de l'invention, le dispositif est monté en dérivation sur une conduite principale d'écoulement de liquide et comprend des moyens de captation d'une fraction du débit de liquide dans la conduite, des moyens de liaison de ces moyens de captation aux moyens d'entrée de liquide dans l'enceinte et des moyens de liaison des moyens de sortie de liquide de l'enceinte à une partie aval de la conduite.

Dans ce cas, le débit de liquide prélevé dans la conduite est traité dans le dispositif selon l'invention, puis est réintroduit dans la conduite, avec une concentration en réactif qui est fonction du débit global dans la conduite.

Selon encore un autre mode de réalisation de l'invention, les moyens de sortie de liquide de l'enceinte sont reliés à la conduite précitée par une chambre tampon traversée par le liquide s'écoulant dans la conduite et comprenant en partie supérieure une tubulure de liaison avec le magasin à réactif, pour égaliser les pressions d'air en partie supérieure de la chambre tampon et dans le magasin à réactif et empêcher la remontée de liquide dans le magasin.

On peut ainsi traiter des débits de liquide sous pression en évitant tout risque de remontée de liquide dans le magasin à réactif.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
- la figure 1 est une vue schématique en coupe axiale d'un dispositif selon l'invention ;
- la figure 2 est une vue schématique en coupe axiale d'une variante de réalisation de ce dispositif;
- la figure 3 est une vue schématique en coupe axiale d'une autre variante de réalisation du dispositif selon l'invention.

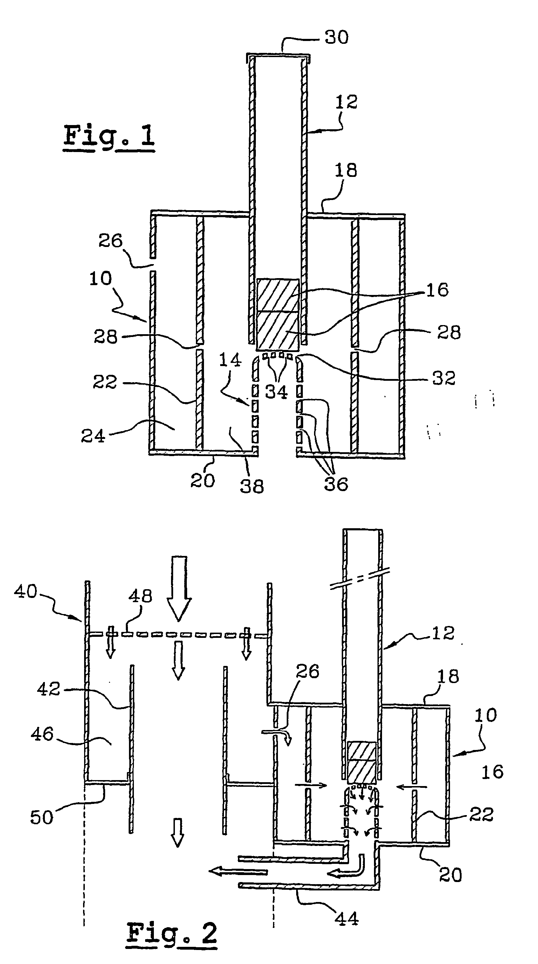

Le dispositif de la figure 1 comprend une enceinte 10 montée autour d'un magasin à réactif 12 et d'un support de galet 14, qui sont alignés axialement l'un avec l'autre à l'intérieur de l'enceinte 10, le support 14 étant destiné à porter le galet inférieur 16 d'une pile de galets de réactif 16 enfermés à l'intérieur du magasin 12.

L'enceinte 10 est par exemple de forme générale cylindrique et est fermée à ses extrémités par une paroi supérieure 18 et par une paroi inférieure 20 qui comportent chacune un orifice central, le magasin 12 étant monté fixement dans l'orifice central de la paroi supérieure 18 et le support de galet 14 étant monté fixement dans l'orifice central de la paroi inférieure 20, de façon avantageusement démontable à des fins de nettoyage ou de maintenance.

L'enceinte 10 comprend une paroi tubulaire interne 22 qui s'étend sur toute sa hauteur et qui délimite à l'intérieur de l'enceinte 10, entre ses parois d'extrémité 18 et 20, un espace annulaire interne 24 dans lequel débouche une entrée 26 de liquide formée en partie supérieure de l'enceinte.

La paroi tubulaire interne 22 comporte au moins un et de préférence plusieurs orifices radiaux 28 au niveau de l'intervalle entre l'extrémité inférieure du magasin 12 et de l'extrémité supérieure du support de galet 14, ces orifices radiaux étant par exemple répartis autour de l'axe du dispositif selon l'invention.

Avantageusement, le magasin 12 est formé d'un simple tube cylindrique dont l'extrémité supérieure est fermée à étanchéité par un couvercle 30 et dont l'extrémité inférieure ouverte est à faible distance de l'extrémité supérieure du support de galet 14, de telle sorte que la base du galet inférieur 16 contenue dans le magasin 12 est apparente à l'extrémité inférieure du magasin, sensiblement au niveau des orifices radiaux 28 précités.

Le support 14 est également formé d'un tube dont l'extrémité supérieure est fermée par une paroi incurvée 32, dont la convexité est tournée vers le galet inférieur 16 et qui comporte des perçages axiaux 34 dont les dimensions sont déterminées pour éviter une obstruction par la matière des galets 16, et éventuellement des plots ou autres moyens à surface réduite de contact avec le galet inférieur 16.

D'autres orifices 36 sont formés dans la paroi cylindrique du support 14 dont l'extrémité inférieure ouverte constitue un orifice de sortie de liquide hors de l'enceinte 10.

Le fonctionnement du dispositif qui vient d'être décrit est le suivant :
- un débit de liquide à traiter est introduit dans l'enceinte 10 par l'orifice 26 et remplit l'espace annulaire 24 de cette enceinte jusqu'à parvenir au niveau des orifices radiaux 28. Le liquide sort de ces orifices sous forme de jets radiaux orientés vers la base du galet inférieur 16 contenu dans le magasin 12. L'action des jets de liquide sur la base du galet se traduit par une érosion progressive de la base du galet et par une dissolution de la matière du galet dans le liquide qui peut d'une part s'écouler par les trous axiaux 34 de la paroi supérieure du support 14 et d'autre part s'accumuler plus ou moins dans l'espace annulaire 38 délimité par le support de galets 14 et la paroi tubulaire interne 22 de l'enceinte 10, et s'écouler par les orifices précités 36 du support de galets.

Sous l'effet de leur poids, les galets 16 contenus dans le magasin 12 descendent progressivement à l'intérieur du magasin au fur et à mesure de la dissolution de la base du galet inférieur 16 par les jets de liquide sortant des orifices 28.

L'érosion de la base du galet et sa dissolution dans le liquide sont fonction de la pression du liquide à son introduction dans l'enceinte 10 et suivent les variations de cette pression, de sorte que la concentration en réactif du liquide sortant de l'enceinte par l'intérieur du support 14 peut rester sensiblement constante au cours du temps quand la pression du liquide varie à l'entrée dans l'enceinte 10.

Dans une variante de réalisation non représentée, le magasin 12 et le support 14 pourraient être formés d'une seule pièce, ou formés de deux pièces emboîtées ou fixées l'une dans l'autre, la surface périphérique de cette pièce ou de cet ensemble de pièces étant largement ajourée au niveau de la base du galet inférieur pour permettre l'érosion de cette base par les jets de liquide sortant des orifices radiaux 28.

Le dispositif de la figure 1 peut être axialement très compact, la distance axiale entre l'orifice d'entrée 26 et la sortie de liquide hors de l'enceinte étant par exemple de l'ordre de 5 centimètres ou moins. Un tel dispositif peut donc être utilisé pour la désinfection de l'eau stockée dans un château d'eau ou dans un réservoir.

Dans la forme de réalisation de 1a figure 2, le dispositif de la figure 1 est monté en dérivation sur une canalisation principale 40 dans laquelle s'écoule un débit de liquide à traiter, une fraction de ce débit étant prélevée par des moyens 42 à l'intérieur de la canalisation principale 40 et introduite dans le dispositif selon l'invention où elle se charge en réactif avant d'être réintroduite en 44 dans 1a canalisation principale 40, en aval de la zone de prélèvement.

Dans l'exemple de réalisation représenté, les moyens de prélèvement 42 comprennent un tronçon de tube 42 monté axialement dans la canalisation principale 40 et délimitant à l'intérieur de celle-ci une chambre annulaire 46 reliée à l'orifice 26 d'entrée de liquide dans l'enceinte 10 précitée. Comme représenté, une grille ou paroi perforée 48 de répartition du débit de liquide peut être montée dans la canalisation 40 en amont de la chambre annulaire 46 et du tronçon de tube 42, et une paroi transversale 50 ferme la chambre annulaire 46 à son extrémité aval par rapport au sens de l'écoulement du liquide dans la canalisation 40.

La sortie de liquide de l'enceinte 10 est raccordée par un conduit 44 à la canalisation principale 40, en aval de la chambre annulaire 46.

Dans cette forme de réalisation, c'est le dimensionnement des orifices de la grille ou paroi perforée 48 et de la chambre annulaire 46 (et bien entendu de l'orifice 26 d'entrée dans l'enceinte 10) qui détermine la fraction du débit total de liquide dans la canalisation principale 40 que l'on va faire passer dans le dispositif de dosage selon l'invention. Bien entendu, d'autres moyens de réglage de débit, tels qu'une vanne, peuvent être prévus entre l'orifice 26 et la chambre annulaire 46.

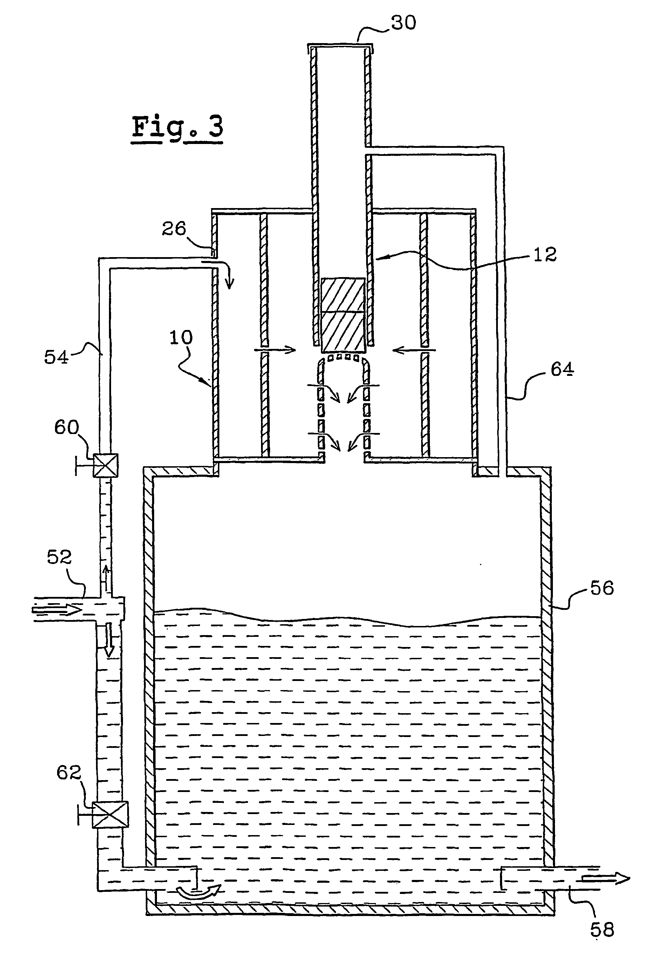

Dans la forme de réalisation représentée en figure 3, le dispositif de dosage selon l'invention est branché en dérivation sur une canalisation principale 52 par l'intermédiaire d'un conduit d'alimentation 54 reliant la canalisation principale 52 à l'orifice 26 d'entrée de liquide dans l'enceinte 10, et d'une chambre tampon 56 agencée entre la sortie de liquide de l'enceinte 10 et la canalisation principale 52.

Cette chambre tampon 56 s'étend sous l'enceinte 10 dont la sortie de liquide, formée par le support de galet 14, débouche en partie supérieure de la chambre tampon 56.

En partie inférieure, la chambre tampon 56 est raccordée d'une part à une extrémité de la canalisation principale 52 qui l'alimente en liquide et d'autre part à une canalisation 58 de sortie de liquide.

Des moyens de réglage de débit 60 et 62 sont montés dans le conduit d'alimentation 54 et dans la canalisation 52, en aval du conduit 54. En fonctionnement, comme la chambre tampon 56 est fermée de façon étanche par l'enceinte 10, l'air contenu en partie supérieure de la chambre tampon est comprimé à une pression égale à celle du liquide remplissant la partie inférieure de cette chambre. Un conduit 64 relie la partie supérieure de la chambre 56 au magasin 12 de réactif, dont l'extrémité supérieure est fermée à étanchéité par le couvercle 30, de sorte que la même pression d'air règne dans le magasin 12 et dans la partie supérieure de la chambre tampon 56, pour empêcher toute remontée de liquide à l'intérieur du magasin 12.

Dans cette forme de réalisation, une petite fraction du liquide circulant dans le conduit principal 52 passe par le conduit 54 dans le dispositif de dosage selon l'invention et se charge en réactif avant de retomber dans la chambre tampon 56. La fraction restante du débit de liquide amenée par le conduit principal 52 est introduite dans la chambre tampon 56 où elle se mélange avec le liquide chargé en réactif avant de sortir de la chambre tampon 56 par la canalisation 58.

De préférence, le rapport entre le volume du magasin 12 à galets de réactif et le volume total (volume du magasin 12 et de la chambre tampon 56) est égal à K(1+p), K étant un facteur correctif compris entre 1 et 5 et p étant la pression maximale admissible dans la chambre tampon 56 et dans le magasin 12.

Les principales applications de l'invention sont les suivantes :
- désinfection de l'eau de remplissage des avions et autres véhicules de transport de passagers,
- chloration de l'eau au niveau des captages en niveau rural, des réservoirs et châteaux d'eau, des refuges et gîtes de montagne, des campings et hôtels, des pompes manuelles,
- injection et dosage de coagulants et de floculants dans les alimentations en eau potable,
- traitement des eaux de piscine par injection et dosage de produits désinfectants, de coagulants, de floculants, d'acide ou de base pour la correction du pH,
- dans l'industrie, coagulation-floculation dans les procédés de filtration, injection de produit antitartre et anticorrosion, injection et dosage de produits de conditionnement, injection et dosage de produits désinfectants,
- dans l'industrie agricole et l'industrie alimentaire, injection et dosage de produits fertilisants, correction du pH, injection et dosage de produits phytosanitaires pour la protection des cultures, de produits désinfectants, de produits stérilisants sur les légumes,
- dans l'industrie du chauffage et du froid, injection et dosage d'inhibiteurs de corrosion, de stérilisants dans les systèmes de climatisation.

## Revendications

1. Dispositif de dosage par dissolution d'un réactif dans un écoulement de liquide, comprenant :
- un magasin à réactif (12), contenant au moins un galet (16) de réactif à dissoudre, et
- une enceinte (10) entourant au moins la partie inférieure du magasin à réactif (12) et comprenant une entrée (26) de liquide, des moyens (28) d'amenée du liquide au contact du galet de réactif (16) et des moyens (14) de sortie du liquide,
**caractérisé en ce qu'**il comprend également des moyens (28) de formation d'au moins un jet de liquide dirigé sensiblement radialement vers le galet (16) à dissoudre, et des moyens (14) de support du galet dans une position exposant au moins la base de ce galet au jet de liquide.

2. Dispositif selon la revendication 1, **caractérisé en ce que** les moyens (28) de formation des jets de liquide sont présentés par une paroi tubulaire interne (22) de l'enceinte (10) et sont à distance d'une paroi inférieure (20) de cette enceinte, en définissant dans celle-ci une chambre annulaire (24) d'accumulation de liquide.

3. Dispositif selon la revendication 2, **caractérisé en ce que** les moyens de formation des jets sont des orifices sensiblement radiaux (28) de la paroi tubulaire (22) de l'enceinte.

4. Dispositif selon l'une des revendications précédentes, **caractérisé en ce que** les moyens (14) de support de galet sont portés par une paroi inférieure (20) de l'enceinte et s'étendent sensiblement dans l'axe du magasin à réactif (12), sous l'extrémité inférieure de celui-ci.

5. Dispositif selon l'une des revendications précédentes, **caractérisé en ce que** l'extrémité inférieure du magasin à réactif (12) est ouverte.

6. Dispositif selon l'une des revendications précédentes, **caractérisé en ce que** les moyens de sortie de liquide de l'enceinte sont formés par des orifices (34, 36) des moyens (14) de support de galet.

7. Dispositif selon l'une des revendications précédentes, **caractérisé en ce que** les moyens (14) de support de galet comprennent une face supérieure (32) en contact avec la base d'un galet (16), cette face supérieure comportant des orifices (34) de passage de liquide et ayant une forme convexe ou comprenant des moyens à surface réduite de contact avec la base d'un galet (16) à dissoudre.

8. Dispositif selon l'une des revendications précédentes, **caractérisé en ce que** le magasin à réactif (12) et les moyens (14) de support de galet sont des tubes montés en alignement axial sur une paroi supérieure (18) et sur une paroi inférieure (20) respectivement de l'enceinte (10).

9. Dispositif selon l'une des revendications précédentes, **caractérisé en ce que** la distance axiale entre les moyens d'entrée et de sortie de liquide de l'enceinte est de l'ordre de cinq centimètres ou moins.

10. Dispositif selon l'une des revendications précédentes, **caractérisé en ce qu'**il est monté en dérivation sur une conduite principale (40, 52) d'écoulement de liquide et comprend des moyens (42, 46) de captation d'une fraction du débit de liquide dans la conduite (40), des moyens de liaison de ces moyens de captation au moyen (26) d'entrée de liquide dans l'enceinte, et des moyens (44) de liaison des moyens de sortie de liquide de l'enceinte à une partie avale de la conduite principale (40).

11. Dispositif selon la revendication 10, **caractérisé en ce que** les moyens de sortie de liquide de l'enceinte comprennent une chambre tampon (56) traversée par le liquide s'écoulant dans la conduite principale (52) et comprenant en partie supérieure un conduit (64) de liaison avec le magasin à réactif (12) pour égaliser les pressions d'air en partie supérieure de la chambre tampon (56) et dans le magasin à réactif (12) et empêcher la remontée de liquide dans le magasin.

## Patentansprüche

1. Vorrichtung zur Dosierung mittels Auflösung eines Reagens in einem Flüssigkeitsstrom, umfassend:
- ein Reagensmagazin (12), beinhaltend mindestens eine Reibrolle (16) für das aufzulösende Reagens, und
- einen Behälter (10), welcher mindestens den unteren Teil des Reagensmagazins (12) umgibt und welcher einen Flüssigkeitseinlass (26), Mittel (28) zum Kontaktieren von Flüssigkeit mit der Reibrolle (16) für das Reagens und Ausgangsmittel (14) für die Flüssigkeit,
**dadurch gekennzeichnet, dass** sie auch Mittel (28) zum Erzeugen mindestens eines im Wesentlichen radial auf die Reibrolle (16) gerichteten aufzulösenden Flüssigkeitsstrahls, und Mittel (14) zum Halten der Reibrolle in einer Stellung, welche mindestens den Boden dieser Reibrolle dem Flüssigkeitsstrahl aussetzt.

2. Vorrichtung nach dem Anspruch 1, **dadurch gekennzeichnet, dass** die Mittel (28) zum Erzeugen von Flüssigkeitsstrahlen als röhrenförmige innere Wandung (22) des Behälters (10) ausgebildet sind und von einer unteren Wandung (20) dieses Behälters beabstandet sind, in dem sie in diesem eine ringförmige Kammer (24) zur Speicherung von Flüssigkeit abgrenzen.

3. Vorrichtung nach dem Anspruch 2, **dadurch gekennzeichnet, dass** die Mittel zur Erzeugung der Strahlen im Wesentlichen radiale Öffnungen (28) der röhrenförmigen Wandung (22) des Behälters sind.

4. Vorrichtung nach einem der vorhergehenden Ansprüche, **dadurch gekennzeichnet, dass** die Mittel (14) zum Halten der Reibrolle von einer unteren Wandung (20) des Behälters getragen sind und sich im Wesentlichen entlang der Achse des Reagensmagazins (12) erstrecken, unterhalb von dessen unterem Ende.

5. Vorrichtung nach einem der vorhergehenden Ansprüche, **dadurch gekennzeichnet, dass** das untere Ende des Reagensmagazins (12) offen ist.

6. Vorrichtung nach einem der vorhergehenden Ansprüche, **dadurch gekennzeichnet, dass** die Flüssigkeitsauslassmittel des Behälters durch Öffnungen (34, 36) der Haltemittel (14) der Reibrolle ausgebildet sind.

7. Vorrichtung nach einem der vorhergehenden Ansprüche, **dadurch gekennzeichnet, dass** die Haltemittel (14) der Reibrolle eine Oberseite (32) in Berührung mit dem Boden der Reibrolle (16) umfassen, wobei diese Oberseite Flüssigkeitsdurchgangsöffnungen (34) umfasst und eine konvexe Form aufweist oder Mittel mit verminderter Kontaktfläche mit dem Boden einer aufzulösenden Reibrolle (16) umfasst.

8. Vorrichtung nach einem der vorhergehenden Ansprüche, **dadurch gekennzeichnet, dass** das Reagensmagazin (12) und die Haltemittel (14) der Reibrolle in axialer Ausrichtung an einer oberen Wandung (18) bzw. einer unteren Wandung (20) des Behälters (10) befestigte Rohre sind.

9. Vorrichtung nach einem der vorhergehenden Ansprüche, **dadurch gekennzeichnet, dass** der axiale Abstand zwischen den Flüssigkeitseinlass- und Flüssigkeitsauslassmitteln des Behälters in der Größenordnung von 5 cm oder weniger liegt.

10. Vorrichtung nach einem der vorhergehenden Ansprüche, **dadurch gekennzeichnet, dass** sie abzweigend an einer Hauptleitung (40, 52) für Flüssigkeitsströmung angebracht ist und Mittel (42, 46) zum Auffangen eines Teils des Flüssigkeitsstromes in der Leitung (40), Verbindungsmittel dieser Auffangmittel mit dem Flüssigkeitseinlassmittel (26) in dem Behälter, und Verbindungsmittel (44) der Flüssigkeitsauslassmittel des Behälters mit einem unterstromigen Abschnitt der Hauptleitung (40) umfasst.

11. Vorrichtung nach dem Anspruch 10, **dadurch gekennzeichnet, dass** die Flüssigkeitsauslassmittel des Behälters eine von der in der Hauptleitung (52) fließenden Flüssigkeit durchflutete Pufferkammer (56) umfassen und umfassend am oberen Abschnitt eine Leitung (64) zum Verbinden mit dem Reagensmagazin (12) zum Ausgleichen der Luftdrücke im oberen Abschnitt der Pufferkammer (56) und in dem Reagensmagazin (12) und zum Unterbinden des Aufsteigens von Flüssigkeit in das Magazin.

## Claims

1. Device for admixing by dissolving a reagent in a liquid flow, comprising:
- a reagent magazine (12) containing at least one block (16) of reagent to be dissolved, and
- an enclosure (10) surrounding at least the lower part of the reagent magazine (12) and comprising a liquid inlet (26), means (28) for bringing the liquid into contact with the block of reagent (16) and liquid outlet means (14),
***characterised* in that** it also comprises means (28) for forming at least one jet of liquid directed substantially radially towards the block (16) to be dissolved, and means (14) for supporting the block in a position exposing at least the base of this block to the jet of liquid.

2. Device according to claim 1, ***characterised* in that** the means (28) for forming the jets of liquid are exhibited by an internal tubular wall (22) of the enclosure (10) and are a distance from a lower wall (20) of said enclosure, defining in the latter an annular chamber (24) for accumulation of liquid.

3. Device according to claim 2, ***characterised in* that** the means for forming the jets are substantially radial orifices (28) in the tubular wall (22) of the enclosure.

4. Device according to one of the preceding claims, ***characterised in* that** the means (14) for supporting the block are carried by a lower wall (20) of the enclosure and extend substantially in the axis of the reagent magazine (12) under the lower end of the latter.

5. Device according to one of the preceding claims, ***characterised* in that** the lower end of the reagent magazine (12) is open.

6. Device according to one of the preceding claims, ***characterised* in that** the liquid outlet means of the enclosure are formed by orifices (34, 36) in the means (14) for supporting the block.

7. Device according to one of the preceding claims, ***characterised* in that** the means (14) for supporting the block comprise an upper face (32) in contact with the base of a block (16), this upper face comprising orifices (34) for passage of liquid and having a convex shape or comprising means with a reduced surface in contact with the base of a block (16) to be dissolved.

8. Device according to one of the preceding claims, ***characterised* in that** the reagent magazine (12) and the means (14) for supporting the block are tubes mounted in axial alignment on an upper wall (18) and on a lower wall (20) respectively of the enclosure (10).

9. Device according to one of the preceding claims, ***characterised* in that** the axial distance between the liquid inlet means and the liquid outlet means of the enclosure is of the order of five centimetres or less.

10. Device according to one of the preceding claims, ***characterised in* that** it is mounted parallel with a main pipe (40, 52) for a liquid flow and comprises means (42, 46) for collecting a fraction of the flow of liquid in the pipe (40), means for connecting these means of collection to the liquid inlet means (26) of the enclosure, and means (44) for connecting the liquid outlet means of the enclosure to a downstream portion of the main pipe (40).

11. Device according to claim 10, ***characterised in* that** the liquid outlet means of the enclosure comprise a buffer chamber (56) through which the liquid flowing in the main pipe (52) passes and comprising in the upper portion a connecting pipe (64) to the reagent magazine (12) for equalising the air pressures in the upper portion of the buffer chamber (56) and in the reagent magazine (12) and preventing liquid rising into the magazine.
